# EUROPÄISCHE PATENTANMELDUNG

(11) **EP 0 636 511 A1**
(43) Veröffentlichungstag der Anmeldung: **01.02.1995**
(21) Anmeldenummer: 94111480.3
(22) Anmeldetag: 22.07.1994
(51) Int. Cl.: B60N 2/30

(54) **Klappsitz**

(30) Priorität: 26.07.1993 DE 4324882
(71) Anmelder: Rechter, Georg, 97346 Hellmitzheim (DE)
(72) Erfinder: Rechter, Georg, 97346 Hellmitzheim (DE)
(74) Vertreter: Pöhner, Wilfried Anton, Dr.

(57) **Zusammenfassung**

Die Erfindung bezieht sich auf einen Klappsitz, mit einer Rückstellfeder (9) und einem Anschlag (7), der das Drehmoment einer heruntergeklappten Sitzfläche (2) auf die Wand (1) überträgt, wobei ein Scharnier einen an einer Wand (1) angebrachten Befestigungsbock (5), einen an der Sitzfläche (1) fixierten Lagerbock (4) und eine Welle (3) aufweist, und empfiehlt, daß die Welle (3) relativ zum Befestigungsbock (5) drehbar gelagert ist, daß der Anschlag (7) auf der Welle (3) festgelegt ist, daß der Lagerbock (4) über einen bei Überlastung abscherenden Sicherungsstift (6) mit der Welle (3) verbunden ist, und daß die Rückstellfeder (9) auf die Welle (3) und den Befestigungsbock (5) wirkt.

Alternativ wird vorgeschlagen, daß daß die Welle (3) relativ zum Befestigungsbock (5) drehbar gelagert ist, daß der Anschlag (7) auf der Welle (3) befestigt ist, daß der Lagerbock (4) durch eine Überlastkupplung (12) mit der Welle (3) verbunden ist, und daß die Rückstellfeder (9) auf die Welle (3) und den Befestigungsbock (5) wirkt.

## Beschreibung

Die Erfindung bezieht sich auf einen Klappsitz, insbesondere für öffentliche Verkehrsmittel, mit einem an einer Wand zu befestigenden Scharnier, einer Rückstellfeder und einem Anschlag, der das Drehmoment einer heruntergeklappten Sitzfläche auf die Wand überträgt, wobei das Scharnier einen an der Wand angebrachten Befestigungsbock, einen an der Sitzfläche fixierten Lagerbock und eine den Befestigungs- und Lagerbock durchdringende, horizontal und parallel zur Wand verlaufende Welle aufweist.

Als Reserve- oder Notplätze dienende Klappsitze werden häufig in den Einstiegs- und/oder Durchgangsbereichen öffentlicher Verkehrsmittel, wie Reisezug-, Straßenbahn- und U-Bahnwagen montiert und bestehen in ihrem grundsätzlichen Aufbau aus einer mittels eines Scharniers an einer Wand befestigten Sitzfläche, einer Rückstellfeder und einem Anschlag. Die Rückstellfeder verschwenkt eine unbelastete Sitzfläche in eine vertikale Position an die Wand, während der Anschlag gewöhnlich ein auf einem Wandvorsprung aufliegender Teil der Sitzflächenunterseite ist und das Drehmoment eines heruntergeklappten, belasteten Sitzes auf die Wand überträgt.

Als nachteilig ist bei den bekannten Klappsitzen anzusehen, daß sie sich als wenig resistent gegen Vandalismus, wie er insbesondere von jugendlichen, häufig alkoholisierten Tätern ausgeübt wird, erweisen. Vornehmlich durch Aufspringen aus einer größeren Höhe auf einen heruntergeklappten, von einer zweiten Person gehaltenen Sitz wird die Befestigung aus der Wand herausgerissen und/oder die Sitzfläche zerstört, so daß aufwendige und kostenintensive Reparaturen notwendig werden.

Ausgehend vom Stande der Technik liegt der Erfindung das Problem zugrunde, einen Klappsitz so zu gestalten, daß durch Überlastung, insbesondere durch Vandalismus verursachte Beschädigungen gering gehalten und schnell und preiswert reparierbar sind.

Im folgenden werden zwei alternativ oder auch simultan verwendbare Lösungen vorgeschlagen, von denen eine einen abscherenden Sicherungsstift und die andere eine Überlastkupplung verwendet.

Erfindungsgemäß wird das Problem dadurch gelöst, daß die Welle relativ zum Befestigungsbock drehbar gelagert ist, daß der Anschlag auf der Welle festgelegt ist, daß der Lagerbock über einen bei Überlastung abscherenden Sicherungsstift mit der Welle verbunden ist, und daß die Rückstellfeder auf die Welle und den Befestigungsbock wirkt.

Der Kerngedanke der Erfindung besteht darin, eine Sollbruchstelle an der Fixierung der Sitzfläche vorzusehen, so daß der Klappsitz bei Überlastung nach unten verschwenkt, bis er an der Wand anliegt und weiteren Beschädigungen nicht mehr zugänglich ist. Im einzelnen ist der Klappsitz folgendermaßen aufgebaut:
Die Sitzfläche ist über einen Lagerbock, eine Welle und einen Befestigungsbock an der Wand montiert, wobei die Welle drehbar im Befestigungsbock gelagert ist und die Drehmomentübertragung eines horizontal heruntergeklappten, belasteten Sitzes auf die Wand über den Lagerbock, die Welle und einen auf der Welle festgelegten Anschlag erfolgt. Ein als Sollbruchstelle dienender, bei Überlastung abscherender Sicherungsstift verbindet den Lagerbock mit der Welle und ist beispielsweise in eine den Lagerbock und die Welle radial durchdringende Bohrung eingebracht. Überschreitet eine vertikal nach unten auf die Sitzfläche wirkende Kraft ihre maximale Belastbarkeit, wird das Drehmoment zwischen Lagerbock und Welle derart groß, daß der Sicherungsstift abgeschert wird und die Sitzfläche mangels einer Abstützung nach unten ausweicht. Die auf die Welle und den mit der Wand verbundenen Befestigungsbock einwirkende Rückstellfeder verbringt - bei einem intakten Sicherungsstift - die Sitzfläche in ihre vertikale Ruheposition. Entfällt jedoch die Drehmomentübertragung zwischen Welle und Lagerbock, verbleibt die Sitzfläche in der tiefstmöglichen Lage. Das Wartungspersonal kann die Beschädigung unschwer an der Positionierung der Sitzfläche erkennen und braucht lediglich den preisgünstigen Sicherungsstift zu erneuern, um die Funktionsbereitschaft des Klappsitzes wiederherzustellen. Auch Fahrgästen ist die Identifikation eines defekten Klappsitzes erleichtert.

Alternativ zur Lehre des Anspruchs 1 läßt sich das der Erfindung zugrunde liegende Problem dadurch lösen, daß die Welle relativ zum Befestigungsbock drehbar gelagert ist, daß der Anschlag auf der Welle befestigt ist, daß der Lagerbock durch eine Überlastkupplung mit der Welle verbunden ist, und daß die Rückstellfeder auf die Welle und den Befestigungsbock wirkt.

Der Kerngedanke dieser Alternative besteht darin, eine bei Überlastung durchrutschende Kupplung zwischen dem Lagerbock und dem bei heruntergeklapptem Sitz drehmomentschlüssig mit der Wand verbundenen Anschlag vorzusehen, so daß die Sitzfläche infolge einer Überlastung, insbesondere beim Versuch, sie zu beschädigen, vertikal nach unten ausweicht. Die Überlastkupplung verbindet den Lagerbock mit der Welle und bewirkt, daß der Lagerbock, falls ein maximales Drehmoment überschritten wird, relativ zur Welle und somit zum Anschlag drehbar wird. Ein zu hohes Drehmoment gibt den Anschlag frei oder verschiebt ihn derart gegenüber der Sitzfläche, daß eine Abstützung nur in einer schräg nach unten verlaufenden oder vertikalen Stellung erfolgt. Die Verbindung zwischen Lagerbock und Welle wird, nachdem die Überlastung entfällt, selbsttätig wiederhergestellt. Zur Reparatur ist kein Austausch defekter Teile erforderlich; lediglich die ursprüngliche Positionierung des Lagerbocks ist wiederherzustellen. Um den Fahrgästen und dem Wartungspersonal eine Beschädigung des Sitzes leicht erkennbar zu machen, kann die auf die Welle und den Befestigungsbock, d.h. die Wand wirkende Rückstellfeder derart dimensioniert werden, daß eine unbelastete Sitzfläche nicht in ihre ursprüngliche, vertikale Ruheposition zurückkehrt, falls der Klappsitz überlastet wurde.

Die Vorteile beider Alternativen bestehen vornehmlich darin, daß die Sitzfläche bei Überlastung, insbesondere beim Versuch, mutwilliger Beschädigung, nach unten verschwenkt und somit weiteren Zerstörungsabsichten schwer zugänglich ist. Die Mehrzahl der Täter werden, nachdem sie die Unbrauchbarkeit des Klappsitzes erkannt haben, ablassen. Ein beschädigter Sitz kehrt nicht in seine ursprüngliche, vertikale Ruheposition zurück, sondern verbleibt in der tiefstmöglichen, nach unten verschwenkten Lage - falls ein Sicherungsstift als Sollbruchstelle Verwendung findet - oder in einer anderen Position, so daß die Fahrgäste die Beschädigung unschwer erkennen und sich nicht beim Versuch, sich niederzusetzen, verletzen können. Die Reparaturkosten sind stark reduziert, da das Wartungspersonal beschädigte Sitze unzweifelhaft erkennt und lediglich einen Austausch des Sicherungsstiftes vorzunehmen bzw. den Lagerbock in seine ursprüngliche Lage zu verbringen braucht.

Im speziellen finden als Überlastkupplung zwei durch Federdruck aneinandergepreßte Kupplungsscheiben Verwendung. Das übertragbare Drehmoment kann durch die Abmessungen und das Material der Kupplungsscheiben sowie die Federkonstanten dem jeweiligen Verwendungszweck angepaßt werden.

Um die Stabilität und Verwindungssteifheit zu optimieren, ist in einer vorteilhaften Weiterbildung der Erfindung vorgeschlagen, das zur Befestigung des Sitzes an der Wand dienende Scharnier aus zwei Befestigungs- und zwei Lagerböcken aufzubauen, von denen jeweils einer nahe der seitlichen Berandung des Sitzes befindlich ist. Die Befestigungsböcke sind, um unnötige Verformungen der Welle zu unterbinden, in unmittelbarer Nachbarschaft der Lagerböcke positioniert. Der bevorzugte Einsatz einer einstückigen und damit durchgehenden Welle erhöht ihre Stabilität und erleichtert, den Anschlag und die Rückstellfeder einzustellen.

Als Rückstellfeder ist eine die Welle umschließende Schraubenfeder insbesondere wegen ihrer Kompaktheit vorteilhaft.

Ein verstellbar fixiertes Spannstück ist, da die Möglichkeit besteht, die Federspannung nachträglich zu justieren, als Montageelement zwischen der Rückstellfeder und der Welle empfehlenswert. Weiterhin ist ein Austausch einer defekten Rückstellfeder mit einer unzureichenden Federkonstanten erleichtert.

Im speziellen ist als Anschlag ein Exzenter vorgeschlagen, wobei es sich als zweckmäßig erweist, ihn bei heruntergeklapptem Sitz an einem am Befestigungsbock fixierten Anschlagstift anliegen zu lassen.

Weitere Einzelheiten, Merkmale und Vorteile der Erfindung lassen sich dem nachfolgenden Beschreibungsteil entnehmen, in dem anhand der Zeichnungen Ausführungsbeispiele der Erfindung näher erläutert werden. Es zeigen in schematischer Darstellung
- Figur 1: einen Klappsitz mit einem Sicherungsstift
- Figur 2: einen Klappsitz mit einer Überlastkupplung

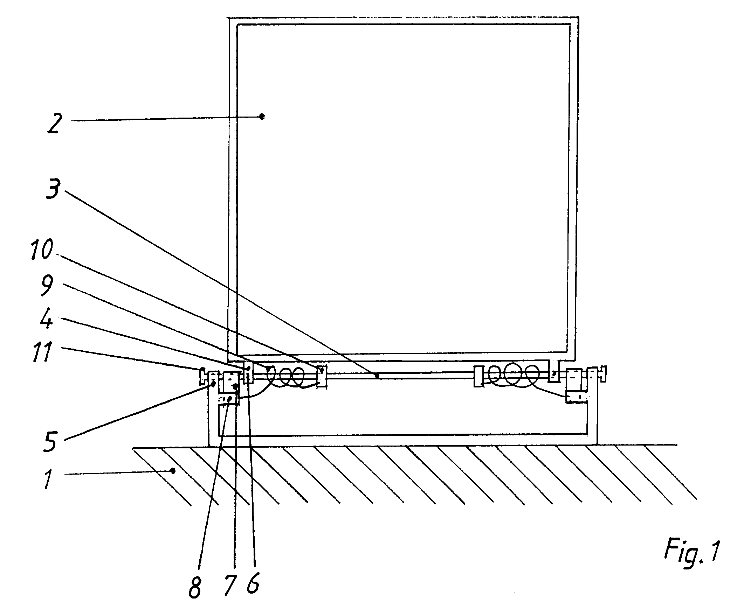

Der in Figur 1 dargestellte Klappsitz besteht in seinem grundsätzlichen Aufbau aus einer Sitzfläche (2), die mittels eines aus zwei Lagerböcken (4), zwei Befestigungsböcken (5) und einer Welle (3) zusammengesetzten Scharnieres an einer Wand (1) befestigt ist. Die Welle (3) verläuft horizontal und parallel zur Wand (1), ist drehbar in den Befestigungsböcken (5) gelagert und stirnseitig mit zur Fixierung dienenden Muttern (11) versehen. Die Drehmomentübertragung von einer heruntergeklappten, belasteten Sitzfläche (2) auf die Wand (1) erfolgt über die nahe jeder Außenseite des Sitzes positionierten Lagerböcke (4), Sicherungsstifte (6), die Welle (3), den exzentrischen Anschlag (7) sowie Anschlagstifte (8). Zwei symmetrische, mit den Anschlagstiften (8) sowie über Spannstücke (10) mit der Welle (3) verbundene Rückstellfedern (9) verbringen einen unbesetzten Sitz in eine vertikale, an der Wand (1) anliegende Ruheposition. Der Sicherungsstift (6) ist in eine radial durch den Lagerbock (4) und die Welle (3) eingebrachte Bohrung eingeführt und wird durch die bei einer Überlastung entstehenden Scherkräfte in zwei Teile zerrissen, so daß die Sitzfläche (2) wegen der fehlenden drehmomentschlüssigen Verbindung vertikal nach unten verschwenkt und weiteren Beschädigungsversuchen nur schwer zugänglich ist. Die Funktionsbereitschaft kann durch einen Austausch des Sicherungsstiftes (6) unschwer wiederhergestellt werden.

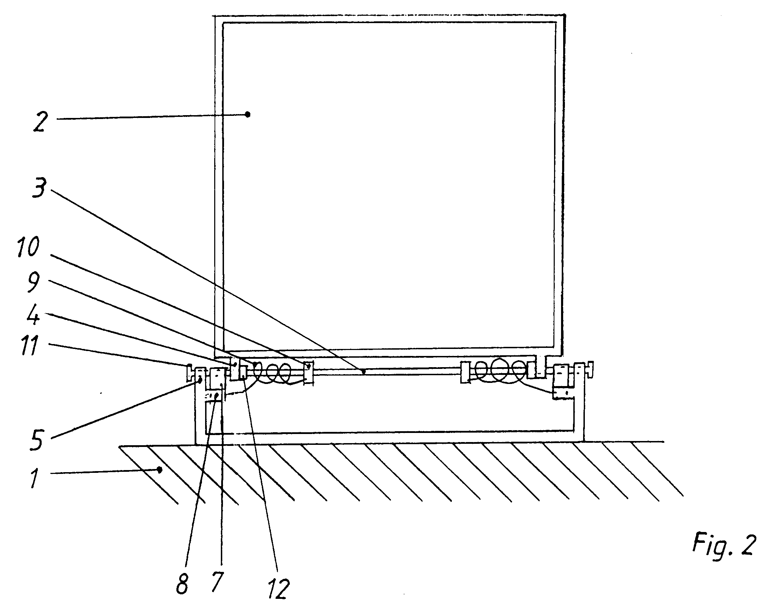

Bei dem in Figur 2 dargestellten Klappsitz ist der Lagerbock (4) durch eine Überlastkupplung (12) drehmomentschlüssig mit der Welle (3) verbunden. Falls das übertragbare Drehmoment überschritten wird, rutscht die Überlastkupplung (12) durch und die Sitzfläche (2) weicht der Überbeanspruchung nach unten aus. Zur Reparatur ist lediglich die ursprüngliche Positionierung des Lagerbocks (4) relativ zur Welle (3) wiederherzustellen.

Im Ergebnis erhält man einen insbesondere für öffentliche Verkehrsmittel geeigneten Klappsitz, der sich durch eine schnelle und preisgünstige Reparatur nach einer Überlastung, wie sie vornehmlich durch Vandalismus hervorgerufen wird, auszeichnet.

## Patentansprüche

1. Klappsitz, insbesondere für öffentliche Verkehrsmittel, mit einem an einer Wand zu befestigenden Scharnier, einer Rückstellfeder und einem Anschlag, der das Drehmoment einer heruntergeklappten Sitzfläche auf die Wand überträgt, wobei das Scharnier einen an der Wand angebrachten Befestigungsbock, einen an der Sitzfläche fixierten Lagerbock und eine den Befestigungs- und Lagerbock durchdringende, horizontal und parallel zur Wand verlaufende Welle aufweist**, dadurch gekennzeichnet,** daß die Welle (3) relativ zum Befestigungsbock (5) drehbar gelagert ist,
daß der Anschlag (7) auf der Welle (3) festgelegt ist,
daß der Lagerbock (4) über einen bei Überlastung abscherenden Sicherungsstift (6) mit der Welle (3) verbunden ist, und
daß die Rückstellfeder (9) auf die Welle (3) und den Befestigungsbock (5) wirkt.

2. Klappsitz, insbesondere für öffentliche Verkehrsmittel, mit einem an einer Wand zu befestigenden Scharnier, einer Rückstellfeder und einem Anschlag, der das Drehmoment einer heruntergeklappten Sitzfläche auf die Wand überträgt, wobei das Scharnier einen an der Wand angebrachten Befestigungsbock, einen an der Sitzfläche fixierten Lagerbock und eine den Befestigungs- und Lagerbock durchdringende, horizontal und parallel zur Wand verlaufende Welle aufweist, **dadurch gekennzeichnet,** daß die Welle (3) relativ zum Befestigungsbock (5) drehbar gelagert ist,
daß der Anschlag (7) auf der Welle (3) befestigt ist,
daß der Lagerbock (4) durch eine Überlastkupplung (12) mit der Welle (3) verbunden ist, und
daß die Rückstellfeder (9) auf die Welle (3) und den Befestigungsbock (5) wirkt.

3. Klappsitz nach Anspruch 2, **dadurch gekennzeichnet,** daß die Überlastkupplung (12) aus zwei durch Federdruck aneinandergepreßten Kupplungsscheiben besteht.

4. Klappsitz nach einem der Ansprüche 1 bis 3, **dadurch gekennzeichnet,** daß das Scharnier zwei Befestigungsböcke (5) und zwei Lagerböcke (4) aufweist, von denen jeweils einer nahe jeder seitlichen Berandung des Sitzes montiert ist, und die Welle (3) vorzugsweise einstückig ist.

5. Klappsitz nach einem der Ansprüche 1 bis 4, **dadurch gekennzeichnet,** daß die Rückstellfeder (9) eine die Welle (3) umschließende Schraubenfeder ist.

6. Klappsitz nach einem der Ansprüche 1 bis 5, **dadurch gekennzeichnet,** daß die Rückstellfeder (9) einen Endes an einem verstellbar auf der Welle (3) fixierten Spannstück (10) befestigt ist.

7. Klappsitz nach einem der Ansprüche 1 bis 6, **gekennzeichnet durch** einen Exzenter als Anschlag (7).

8. Klappsitz nach einem der Ansprüche 1 bis 8, **dadurch gekennzeichnet,** daß der Anschlag (7) bei heruntergeklapptem Sitz (2) an einem am Befestigungsbock (5) fixierten Anschlagstift (8) anliegt.
